# EUROPÄISCHE PATENTSCHRIFT

(11) **EP 3 635 262 B1**
(45) Veröffentlichungstag und Bekanntmachung des Hinweises auf die Patenterteilung: **12.07.2023**
(21) Anmeldenummer: 18728142.3
(22) Anmeldetag: 30.05.2018
(51) Int. Cl.: F15B 11/16, B62D 5/07, F15B 11/17

(54) **DRUCKVERSORGUNGSVORRICHTUNG**
PRESSURE SUPPLY DEVICE
DISPOSITIF D'ALIMENTATION DE PRESSION

(30) Priorität: 08.06.2017 DE 102017005479
(43) Veröffentlichungstag der Anmeldung: 15.04.2020
(73) Patentinhaber: Hydac Systems & Services GmbH, 66280 Sulzbach/Saar (DE)
(72) Erfinder: MÜTER, Matthias, 53179 Bonn (DE)
(74) Vertreter: Bartels und Partner, Patentanwälte
(86) Internationale Anmeldenummer: PCT/EP2018/064163
(87) Internationale Veröffentlichungsnummer: WO 2018/224370

(56) Entgegenhaltungen:
- EP-A1- 0 795 457
- DE-A1- 2 733 054
- DE-A1- 4 108 915
- US-A- 4 665 695

## Beschreibung

Die Erfindung betrifft eine Druckversorgungsvorrichtung zur priorisierten Volumenstromaufteilung, insbesondere bei mobilen Arbeitsmaschinen, mit den Merkmalen im Oberbegriff von Anspruch 1.

Druckversorgungssysteme dieser Art sind bekannt und kommen hauptsächlich bei mobilen Arbeitsmaschinen, insbesondere landwirtschaftlich genutzten Traktoren, zum Einsatz. Beim Betrieb solcher Geräte sind während vieler Betriebsphasen nicht sämtliche der vorhandenen Systeme gleichzeitig mit vollem Volumenstrom zu versorgen, so dass keine Gefahr der Unterversorgung sicherheitsrelevanter Systeme, wie einer Lenkung, zu befürchten ist. Bei Auftreten besonderer oder extremer Arbeitssituationen, beispielsweise bei bestimmten Manövern, wie sie beispielsweise bei der Feldbearbeitung beim Wenden am Feldende auszuführen sind, wobei Lenksysteme, Arbeitshydraulik und gegebenenfalls Bremssysteme den maximalen Volumenstrom anfordern, kann es jedoch möglicherweise zu einer Unterversorgung kommen. Im Hinblick hierauf ist es Stand der Technik, vgl. DE 10 2004 005 606 B3, bei einer Unterversorgung eines priorisierten Verbrauchers, etwa einer Hydrolenkung, den Rücklauf bei einem nicht priorisierten Verbraucher anzudrosseln, um genügend Fluiddruck für den priorisierten Verbraucher sicherzustellen. Ähnliche bekannte Lösungen sehen den Einsatz einer zusätzlichen Hilfspumpe vor, die zur Unterstützung des priorisierten Systems betreibbar ist, insbesondere in Form einer Lenkhilfspumpe.

Die DE 41 08 915 A1 beschreibt eine Druckversorgungsvorrichtung zur priorisierten Volumenstromaufteilung, insbesondere bei mobilen Arbeitsmaschinen, mit den Merkmalen im Oberbegriff von Anspruch 1 bestehend aus mindestens einer mittels LS-Signal ansteuerbaren Verstellpumpe als Hauptpumpe, einer Konstantpumpe als Hilfspumpe, zwei Druckwaagen, einem primär zu versorgenden System, insbesondere in Form einer Lenkhydraulik, das ein LS-Signal abgibt, einem sekundär zu versorgenden System, das ein weiteres LS-Signal abgibt, insbesondere in Form einer Arbeitshydraulik, und einem weiteren hydraulisch zu versorgenden System, insbesondere in Form einer Bremshydraulik, wobei die eine Druckwaage der Versorgung des primär zu versorgenden Systems und/oder des weiteren hydraulischen Systems dient, die andere Druckwaage der Versorgung des primär zu versorgenden Systems und/oder des sekundär zu versorgenden Systems dient und wobei das LS-Signal für die Hauptpumpe von einem Wechselventil stammt, das die jeweiligen LS-Signale von primär und sekundär zu versorgendem System miteinander vergleicht und das LS-Signal mit dem höheren Druck an die Hauptpumpe zu deren Ansteuerung weiterleitet.

Weitere Druckversorgungseinrichtungen gehen aus der EP 0 795 457 A1, der DE 27 33 054 A1 und der US 4 665 695 A hervor.

Im Hinblick auf diese Problematik liegt der Erfindung die Aufgabe zugrunde, eine Druckversorgungsvorrichtung der eingangs genannten Gattung zur Verfügung zu stellen, die sich durch hohe Versorgungssicherheit und ein besonders günstiges Betriebsverhalten auszeichnet.

Erfindungsgemäß ist diese Aufgabe durch eine Druckversorgungsvorrichtung gelöst, die die Merkmale des Patentanspruchs 1 in seiner Gesamtheit aufweist.

Gemäß dem Kennzeichen von Anspruch 1 ist vorgesehen, dass die Hauptpumpe direkt das sekundär zu versorgende System mit Hydraulikmedium vorgebbaren Drucks versorgt und dass die jeweilige Druckwaage von einem LS-Signal derart ansteuerbar ist, dass die Konstantpumpe auch der Versorgung des sekundär zu versorgenden Systems dient.

Demgemäß sieht die Erfindung weiterhin eine Hauptpumpe und eine Hilfspumpe in Form einer Verstellpumpe bzw. einer Konstantpumpe sowie eine erste und eine zweite Druckwaage vor. Dabei ist die zugehörige Fluidschaltung derart ausgebildet, dass die erste Druckwaage der Versorgung des primär zu versorgenden Systems, wie der Lenkung, und/oder des weiteren hydraulischen Systems, wie einer Anhängerbremse, dient, dass die zweite Druckwaage zur Versorgung des primär zu versorgenden Systems und/oder des sekundär zu versorgenden Systems dient und dass die jeweiligen Druckwaagen von einem nachstehend kurz LS-Signal genannten Load-Sensing-Signal derart ansteuerbar sind, dass die Konstantpumpe auch der Versorgung des sekundär zu versorgenden Systems dient. Dadurch, dass die Hilfspumpe auch bei normalen Betriebszuständen, bei denen kein die Unterversorgung des primär zu versorgenden Systems (Lenkung) signalisierendes LS-Signal wirksam ist, als zusätzlicher Versorger dient, der die Verstellpumpe unterstützt, ergibt sich ein besonders sicheres und energetisch günstiges Betriebsverhalten der erfindungsgemäßen Vorrichtung.

Bei besonders vorteilhaften Ausführungsbeispielen ist die Hilfspumpe ausgangsseitig an den Eingang der ersten Druckwaage angeschlossen, die an ihrer mit Federdruck beaufschlagten Steuerseite zusätzlich mit dem LS-Druck auf der Ausgangsseite des Wechselventils oder einem LS-Druck beaufschlagt ist, der von dem Wechselventil abgezweigt das LS-Signal des sekundär zu versorgenden Verbrauchers an diese Steuerseite der ersten Druckwaage weiterleitet.

Die zweite Druckwaage ist an ihrer mit Federdruck beaufschlagten Steuerseite zusätzlich mit dem LS-Druck beaufschlagt, der vor dem Wechselventil abgezweigt das LS-Signal des primär zu versorgenden Verbrauchers an diese Steuerseite weiterleitet.

Die Anordnung ist mit Vorteil so getroffen, dass die beiden Druckwaagen auf jeweils ihrer gegenüberliegend zu der einen Steuerseite angeordneten weiteren Steuerseite mit dem Steuerdruck des primär zu versorgenden Verbrauchers beaufschlagt sind oder die erste Druckwaage auf ihrer weiteren Steuerseite mit dem Steuerdruck des sekundär zu versorgenden Verbrauchers und die andere Druckwaage auf ihrer weiteren Steuerseite mit dem Steuerdruck des primär zu versorgenden Verbrauchers beaufschlagt ist.

In eine Verbindungsleitung zwischen den Ausgängen der zweiten Druckwaage, die einmal zu dem primär zu versorgenden und einmal zu dem sekundär zu versorgenden Verbraucher führt, ist ein Rückschlagventil geschaltet, das in Richtung des primär zu versorgenden Verbrauchers öffnet, oder zwischen dem einen Ausgang der zweiten Druckwaage und dem sekundär zu versorgenden System ist ein Rückschlagventil geschaltet, das in Richtung des Ausgangs der zweiten Druckwaage schließt, wobei der Abgriff des LS-Signals für die erste Druckwaage zwischen diesem Rückschlagventil und der Einspeisestelle der Hauptpumpe in die Versorgungsleitung zu dem sekundär zu versorgenden System erfolgt.

Zwischen den beiden Eingängen der beiden Druckwaagen ist ein weiteres Rückschlagventil geschaltet, oder zwischen dem Eingang der ersten Druckwaage und dem Ausgang der zweiten Druckwaage, wobei das weitere Rückschlagventil in Richtung der zweiten Druckwaage öffnet.

Zwischen dem Eingang der zweiten Druckwaage und dem primär zu versorgenden System ist ein weiteres Rückschlagventil angeordnet, das in Richtung dieses Systems öffnet, wobei zwischen diesem weiteren Rückschlagventil und diesem System die Steuerleitung für die andere Steuerseite der zweiten Druckwaage einmündet.

Schließlich ist ein weiteres Rückschlagventil zwischen die Versorgungsleitung der Hauptpumpe und dem Eingang der zweiten Druckwaage geschaltet, das in Richtung der zweiten Druckwaage öffnet.

Als Druckwaagen können 2/2-Wege-Druckwaagen oder 3/2-Wege-Druckwaagen oder einmal eine 2/2-Wege- und einmal eine 3/2-Wege-Druckwaage verwendet sein.

Nachstehend ist die Erfindung anhand von in der Zeichnung dargestellten Ausführungsbeispielen im Einzelnen erläutert. Es zeigen:
- Fig. 1: in Symboldarstellung die hydraulische Schaltung eines ersten Ausführungsbeispiels der erfindungsgemäßen Druckversorgungsvorrichtung; und
- Fig. 2 bis 6: der Fig. 1 entsprechende Darstellungen der Hydraulikschaltung von fünf weiteren Ausführungsbeispielen der erfindungsgemäßen Druckversorgungsvorrichtung.

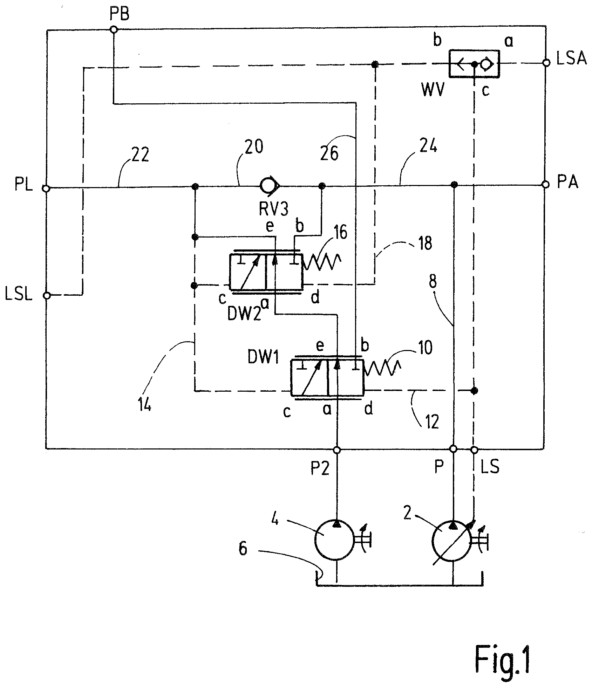

In den Figuren sind eine als Hauptpumpe dienende Verstellpumpe mit 2 und eine als Hilfspumpe dienende Konstantpumpe mit 4 bezeichnet, die beide aus einem Vorratstank 6 ansaugen. Die Verstellpumpe 2 ist ausgangsseitig über einen Druckeingang P und eine Versorgungsleitung 8 unmittelbar mit einem Verbraucheranschluss PA in Verbindung, der zu einem sekundär zu versorgenden System, wie einer Arbeitshydraulik, führt. Die Konstantpumpe 4 ist bei allen Ausführungsbeispielen ausgangsseitig über einen Druckeingang P2 mit einem Eingang a einer ersten Druckwaage DW1 in Verbindung. Diese ist beim Ausführungsbeispiel von Fig. 1 durch ein 3/2-Proportional-Wegeventil gebildet, das an seiner einen Steuerseite d mit dem Druck einer Feder 10 sowie über eine Steuerleitung 12 mit LS-Signal belastet ist. Die andere Steuerseite c der ersten Druckwaage DW1 ist beim Beispiel von Fig. 1 über eine Steuerleitung 14 mit dem Verbraucheranschluss PL verbunden, der zu dem primär zu versorgenden System, hier der Lenkung, führt, so dass die Steuerseite c der ersten Druckwaage DW1 mit dem Druck des Verbraucheranschlusses PL beaufschlagt ist. Die Druckwaage DW1 ist mit einem Ausgang b mit einem Verbraucheranschluss PB verbunden, der zu einem OC-Verbraucher, wie einer Anhängerbremse, führt. Der weitere Ausgang e der Druckwaage DW1 ist mit einem Eingang a einer zweiten Druckwaage DW2 verbunden, die, wie die erste Druckwaage DW1, beim Beispiel von Fig. 1 als 3/2-Proportional-Wegeventil gebildet ist. Eine Steuerseite d der zweiten Druckwaage DW2 ist durch den Druck einer Feder 16 und über eine Steuerleitung 18 mit einem LS-Signal beaufschlagt. Die andere Steuerseite c der zweiten Druckwaage DW2 ist durch den in der Steuerleitung 14 herrschenden Druck und damit, wie die erste Druckwaage DW1, mit dem Druck des Verbraucheranschlusses PL beaufschlagt. Mit ihren Ausgängen e und b ist in Fig. 1 die zweite Druckwaage DW2 mit einer Verbindungsleitung 20 in Verbindung, die mit einem Zweig 22 zum Verbraucheranschluss PL der Lenkung und mit einem zweiten Zweig 24 zum Verbraucheranschluss PA der Arbeitshydraulik führt. In diese Verbindungsleitung 20 ist ein Rückschlagventil RV3 geschaltet, das beim Beispiel von Fig. 1 in Richtung auf den primär zu versorgenden Verbraucher am Ausgangsanschluss PL öffnet. Vervollständigt ist die Schaltung des Beispiels von Fig. 1 durch ein Wechselventil WV, das am einen Eingang b das LS-Signal des primär zu versorgenden Systems, hier der Lenkung, vom Eingangsanschluss LSL her erhält und am anderen Eingang a das LS-Signal des sekundär zu versorgenden Systems, hier der Arbeitshydraulik, vom Eingangssignal LSA her erhält. Vom Ausgang c des Wechselventils gelangt das jeweils höchste LS-Signal über den Ausgangsanschluss LS als Regelgröße zur Verstellpumpe 2 und über die Steuerleitung 12 zur Steuerseite b der ersten Druckwaage DW1.

Für die Schaltung von Fig. 1 ergibt sich folgende Betriebsweise:
Die Verstellpumpe 2 erhält vom Wechselventil WV den höchsten Lastdruck aus dem System gemeldet. Die Konstantpumpe 4 dient als zusätzlicher Versorger, um bei Ausfall der Verstellpumpe 2 eine Versorgung der priorisierten Funktion (wie Lenkung) und der OC-Funktion (hier Anhängerbremse) zu gewährleisten. Es könnten weitere Konstantpumpen zur Ergänzung vorgesehen sein, die jeweils mit einer weiteren Druckwaage (wie der Druckwaage DW1), bei zusätzlichem Volumenstrombedarf des Gesamtsystems Öl in das System einspeisen. Die Federstärke der Druckwaagenfedern 10 und 16 liegt unter der Regeldruckdifferenz der Verstellpumpe 2. Liegt keine Unterversorgung der an den Verbraucheranschlüssen PL und PA befindlichen Verbraucher vor, wobei der LS-Druck des jeweiligen Verbrauchers mindestens um die Regeldruckdifferenz niedriger ist als der an dem Verbraucheranschluss anliegende Druck, dann ist die Druckwaage DW1 entgegen der Kraft der Feder 10 geschaltet. An der zweiten Druckwaage DW2 kommt dementsprechend kein Volumenstrom an, der aufzuteilen wäre. Ein Rückfluss von Öl kann bei Bedarf durch Rückschlagventile an den Verbraucheranschlüssen PL und PA verhindert werden. Die Versorgung des sekundär zu versorgenden Verbrauchers am Verbraucheranschluss PA erfolgt über die Versorgungsleitung 8 von der Verstellpumpe 2 direkt, und die Versorgung des primär zu versorgenden Verbrauchers am Verbraucheranschluss PL erfolgt von der Versorgungsleitung 8 über das Rückschlagventil RV3.

Kommt es zu einer Unterversorgung, wobei der Arbeitsdruck an mindestens einem der Verbraucher niedriger ist als der von dem jeweiligen Verbraucher zurückgemeldete LS-Druck plus der Regeldruckdifferenz der Pumpe 2, dann ändert sich das Kräfteverhältnis an der Druckwaage DW1. Somit wird der Volumenstrom der Konstantpumpe 4 teilweise oder ganz in Richtung der zweiten Druckwaage DW2 weitergeleitet, und dementsprechend wird der Volumenstrom zur Versorgung des Weiteren, zu versorgenden Systems minimiert. Bei sämtlichen gezeigten Ausführungsbeispielen ist dies der Volumenstrom, der über eine OC-Versorgungsleitung 26 vom Ausgang d der ersten Druckwaage DW1 zum Verbraucheranschluss PB führt, an dem als OC-Verbraucher beispielsweise eine Anhängerbremse angeschlossen ist. Die Druckwaage DW2 regelt den von der Konstantpumpe 4 über die Druckwaage DW1 zusätzlich zur Verfügung gestellten Volumenstrom, der für den priorisierten Verbraucher (Lenkung an PL) vorgesehen ist. Bevor eine Unterversorgung am priorisierten Verbraucher eintritt, bewegt sich die Druckwaage DW2 in Richtung der Federkraft und erhöht den zum priorisierten Verbraucher fließenden Volumenstrom. Durch das Rückschlagventil RV3 ist dabei sichergestellt, dass das Öl nicht vom priorisierten Verbraucher zur Arbeitshydraulik am Verbraucheranschluss PA fließen kann. Ist der Volumenstrom der Konstantpumpe 4 mindestens so groß ausgelegt, wie der maximale Volumenstrom am priorisierten Verbraucher, dann kann an diesem keine Unterversorgung auftreten. Ist der Volumenstrom am priorisierten Verbraucher kleiner als der Volumenstrom, auf den die Konstantpumpe 4 ausgelegt ist, dann kann ein Teil des Volumenstroms über die Druckwaagen DW1 und DW2 auch der Arbeitshydraulik an PA zugeführt werden.

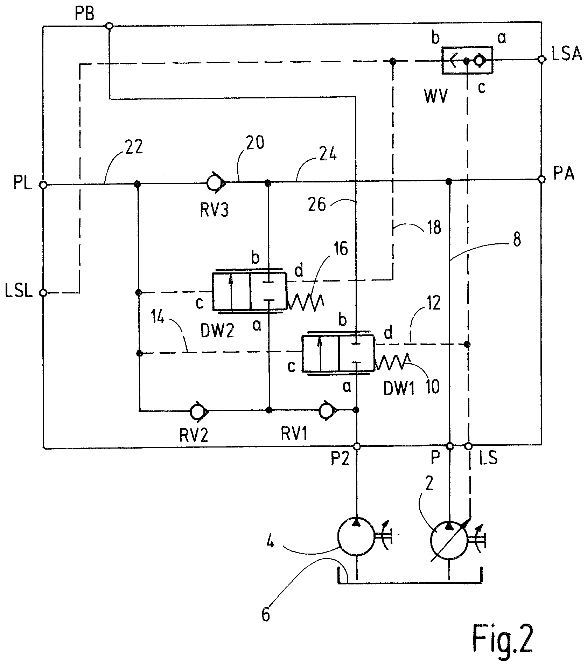

Das Ausführungsbeispiel von Fig. 2 unterscheidet sich vom Beispiel von Fig. 1 dadurch, dass die Druckwaagen DW1 und DW2 jeweils durch 2/2-Proportional-Wegeventile gebildet sind und dass zwei zusätzliche Rückschlagventile RV1 und RV2 vorgesehen sind. Liegt keine Unterversorgung der LS-Verbraucher an den Verbraucheranschlüssen PL und PA vor, sind die Druckwaagen DW1 und DW2 entgegen der Federkraft geschaltet. Ist der Lastdruck des am Verbraucheranschluss PB angeschlossenen OC-Verbrauchers niedriger als der Lastdruck des priorisierten Verbrauchers an PL, kann der Volumenstrom der Konstantpumpe 4 vollständig oder teilweise dem OC-Verbraucher zugeführt werden. Ist dem nicht so, fließt der Volumenstrom der Konstantpumpe 4 teilweise oder vollständig über die Rückschlagventile RV1 und RV2 zum priorisierten Verbraucher an PL. Ein Rückfluss von Öl aus der Arbeitshydraulik (PA) zur Druckwaage DW2 kann bei Bedarf durch ein Rückschlagventil am Ausgang zur Arbeitshydraulik verhindert werden. Die Versorgung des priorisierten Verbrauchers (PL) erfolgt im Normalfall von der Verstellpumpe 2 direkt über das Rückschlagventil RV3. Kommt es zu einer Unterversorgung an den LS-Verbrauchern, dass also der Arbeitsdruck an mindestens einem der Verbraucheranschlüsse PL, PA niedriger als der von dem jeweiligen Verbraucher zurückgemeldete LS-Druck plus der Regeldruckdifferenz der Pumpe 2 ist, dann ändert sich das Kräfteverhältnis an der Druckwaage DW1. Der über das Wechselventil WV zurückgemeldete maximale LS-Druck plus die druckäquivalente Kraft der Feder 10 sind stärker als der Druck am priorisierten Verbraucher PL, daher wird die Druckwaage DW1 in Richtung der Federkraft geschaltet. Somit wird der Volumenstrom der Konstantpumpe 4 teilweise oder ganz in Richtung des Rückschlagventils RV1 weitergeleitet und dementsprechend wird der Volumenstrom zur Versorgung des am Ausgang PB angeschlossenen OC-Verbrauchers minimiert. Die Druckwaage DW2 regelt den von der Konstantpumpe 4 über das Rückschlagventil RV1 zusätzlich zur Verfügung gestellten Volumenstrom, der für den priorisierten Verbraucher (PL) vorgesehen ist. Bevor eine Unterversorgung am priorisierten Verbraucher eintritt, bewegt sich die Druckwaage DW1 in Richtung der Federkraft und erhöht den zum priorisierten Verbraucher über das Rückschlagventil RV2 fließenden Volumenstrom.

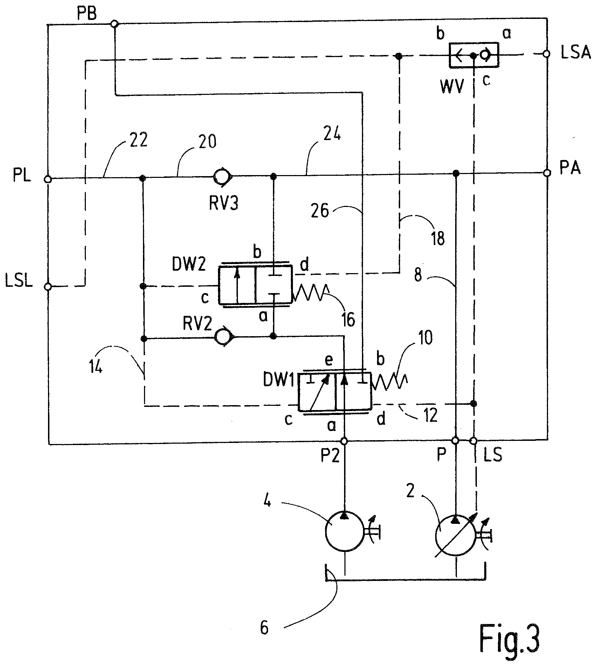

Beim Ausführungsbeispiel von Fig. 3 ist die erste Druckwaage DW1 durch ein 3/2-Proportional-Wegeventil gebildet, und die zweite Druckwaage DW2 ist ein 2/2-Proportional-Wegeventil. Liegt keine Unterversorgung der LS-Verbraucher vor, ist die Druckwaage DW1 entgegen der Federkraft geschaltet. Der Volumenstrom der Konstantpumpe 4 wird dem OC-Verbraucher zugeführt. Wenn keine Unterversorgung vorliegt, ist die Druckwaage DW2 entgegen der Federkraft geschaltet, da der LS-Druck des priorisierten Verbrauchers plus die druckäquivalente Kraft der Feder 16 kleiner ist als der Versorgungsdruck am priorisierten Verbraucher PL. Kommt es zu einer Unterversorgung an den LS-Verbrauchern, wird die Druckwaage DW1 entgegen der Federkraft geschaltet. Somit wird der Volumenstrom der Konstantpumpe 4 teilweise oder ganz in Richtung des Rückschlagventils RV2 und der Druckwaage DW2 weitergeleitet, und dementsprechend wird der Volumenstrom zur Versorgung des OC-Verbrauchers minimiert. Bevor eine Unterversorgung am priorisierten Verbraucher (PL) eintritt, bewegt sich die Druckwaage DW2 in Richtung der Federkraft und verringert den zur Arbeitshydraulik (PA) fließenden Volumenstrom. Dadurch erhöht sich der Volumenstrom zum priorisierten Verbraucher über das Rückschlagventil RV2.

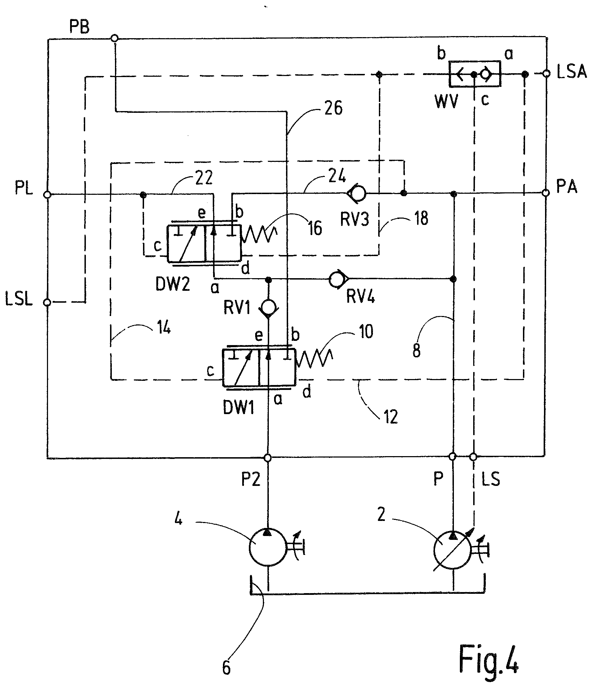

Beim Beispiel von Fig. 4 sind, wie beim Beispiel von Fig. 1, beide Druckwaagen DW1 und DW2 durch ein 3/2-Proportional-Wegeventil gebildet. Zusätzlich ist ein weiteres Rückschlagventil RV4 vorgesehen. Die Druckwaage DW2 regelt den Volumenstrom, der für den priorisierten Verbraucher (Lenkung) vorgesehen ist. Der Zufluss erfolgt von der Verstellpumpe 2 über das Rückschlagventil RV4 oder von der Konstantpumpe 4 über die Druckwaage DW1 und das Rückschlagventil RV1. Bevor eine Unterversorgung am priorisierten Verbraucher eintritt, bewegt sich die Druckwaage DW2 in Richtung der Federkraft und erhöht den Volumenstrom in Richtung des priorisierten Verbrauchers. Durch die Druckwaage DW2 wird sichergestellt, dass die Unterversorgung immer erst bei der Arbeitshydraulik am Verbraucheranschluss PA auftritt und nicht am priorisierten Anschluss PL.

Der Volumenstrom für die Arbeitshydraulik fließt wegen des Durchflusswiderstandes der Druckwaage DW2 hauptsächlich direkt zur Arbeitshydraulik (PA) und nicht oder nur teilweise über die Druckwaage DW2. Liegt keine Unterversorgung vor, ist die Druckwaage DW1 entgegen der Federkraft geschaltet. Die Versorgung des priorisierten Verbrauchers (PL) erfolgt somit von der Verstellpumpe 2 direkt über das Rückschlagventil RV4 und die Druckwaage DW2. Der Volumenstrom der Konstantpumpe 4 wird dann über die Druckwaage DW1 komplett zum OC-Verbraucher geleitet. Kommt es zu einer Unterversorgung am LS-Verbraucher am Verbraucheranschluss PA der Arbeitshydraulik, dann ändert sich das Kräfteverhältnis an der Druckwaage DW1. Da der zurückgemeldete LS-Druck der Arbeitshydraulik plus die druckäquivalente Kraft der Feder 10 stärker ist als der Arbeitsdruck am Verbraucherausgang PA der Arbeitshydraulik, wird die Druckwaage DW1 in Richtung der Federkraft geschaltet. Somit wird der Volumenstrom der Konstantpumpe 4 teilweise oder ganz über das Rückschlagventil RV1 in Richtung der Druckwaage DW2 weitergeleitet, und dementsprechend wird der Volumenstrom zur Versorgung des OC-Verbrauchers minimiert. Das Rückschlagventil RV4 stellt sicher, dass der Volumenstrom nur zur Druckwaage DW2 fließen kann.

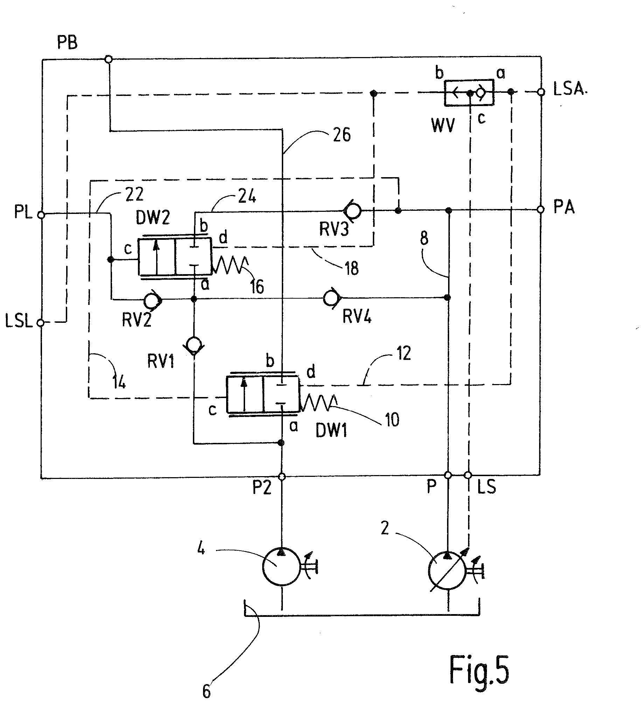

Bei der Variante von Fig. 5 sind beide Druckwaagen DW1 und DW2 durch 2/2-Proportional-Wegeventile gebildet. Liegt keine Unterversorgung des LS-Verbrauchers am Ausgangsanschluss PA der Arbeitshydraulik vor, ist die Druckwaage DW1 entgegen der Federkraft geschaltet. Die Versorgung des priorisierten Verbrauchers an PL erfolgt somit von der Verstellpumpe 2 direkt über die Rückschlagventile RV4 und RV2. Ist der Lastdruck des OC-Verbrauchers niedriger als der Lastdruck des priorisierten Verbrauchers (PL), kann der Volumenstrom der Konstantpumpe 4 teilweise oder vollständig dem OC-Verbraucher zugeführt werden. Ist dem nicht so, fließt der Volumenstrom der Konstantpumpe 4 teilweise oder vollständig über die Rückschlagventile RV1 und RV2 zum priorisierten Verbraucher (PL). Kommt es zu einer Unterversorgung am LS-Verbraucher am Ausgangsanschluss PA der Arbeitshydraulik, wird die Druckwaage DW1 in Richtung der Federkraft geschaltet. Somit wird der Volumenstrom der Konstantpumpe 4 teilweise oder ganz über das Rückschlagventil RV1 in Richtung der Druckwaage DW2 sowie des Rückschlagventils RV2 weitergeleitet, und dementsprechend wird der Volumenstrom zur Versorgung des OC-Verbrauchers minimiert. Das Rückschlagventil RV4 verhindert den direkten Zufluss zur Arbeitshydraulik an PA. Gegenüber der Variante von Fig. 4 besteht ein Vorteil darin, dass der Volumenstrom von der Verstellpumpe 2 zum priorisierten Verbraucher (PL) nicht über die Druckwaage DW2 verläuft, so dass Druckverluste minimiert sind.

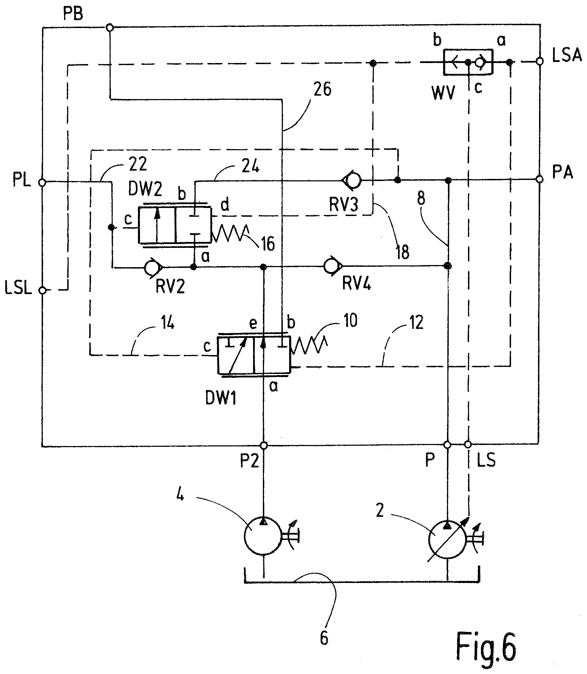

Die Schaltung der Fig. 6 ähnelt den Varianten von Fig. 1 und 2, abgesehen davon, dass die Druckwaage DW1 ein 3/2- und die Druckwaage DW2 ein 2/2-Proportional-Wegeventil ist. Die Druckwaage DW2 regelt wiederum den Volumenstrom, der für den priorisierten Verbraucher (PL) vorgesehen ist. Der Zufluss erfolgt von der Verstellpumpe 2 über das Rückschlagventil RV4 oder von der Konstantpumpe 4 über die Druckwaage DW1. Bevor eine Unterversorgung am priorisierten Verbraucher (PL) eintritt, bewegt sich die Druckwaage DW2 in Richtung der Federkraft und verringert den Volumenstrom in Richtung der Arbeitshydraulik (PA). Dadurch wird der Volumenstrom in Richtung des priorisierten Verbrauchers über das Rückschlagventil RV2 erhöht. Durch die Druckwaage DW2 wird sichergestellt, dass die Unterversorgung immer erst bei der Arbeitshydraulik (PA) auftritt und nicht bei der priorisierten Funktion (PL). Der Volumenstrom für die Arbeitshydraulik an PA fließt wegen des geringeren Durchflusswiderstandes direkt zur Arbeitshydraulik und nicht oder nur teilweise über die Druckwaage DW2. Liegt keine Unterversorgung des LS-Verbrauchers der Arbeitshydraulik (an PA) vor, ist die Druckwaage DW1 entgegen der Federkraft geschaltet und die Versorgung des priorisierten Verbrauchers (PL) erfolgt somit von der Verstellpumpe 2 direkt über die Rückschlagventile RV4 und RV2. Der Volumenstrom der Konstantpumpe 4 wird dem OC-Verbraucher vollständig zugeführt. Kommt es zu einer Unterversorgung am LS-Verbraucher der Arbeitshydraulik (PA), ändert sich das Kräfteverhältnis an der Druckwaage DW1, so dass sie in Richtung der Federkraft geschaltet wird. Somit wird der Volumenstrom der Konstantpumpe 4 teilweise oder ganz in Richtung der Druckwaage DW2 sowie des Rückschlagventils RV2 weitergeleitet, und dementsprechend wird der Volumenstrom zur Versorgung des OC-Verbrauchers minimiert. Das Rückschlagventil RV4 verhindert den direkten Zufluss zur Arbeitshydraulik. Der Vorteil gegenüber den Varianten der Fig. 1 bis 3 besteht darin, dass der Volumenstrom von der Verstellpumpe 2 zum priorisierten Verbraucher (PL) nicht über die Druckwaage DW2 verläuft.

## Patentansprüche

1. Druckversorgungsvorrichtung zur priorisierten Volumenstromaufteilung, insbesondere bei mobilen Arbeitsmaschinen, bestehend aus mindestens
- einer mittels LS-Signal ansteuerbaren Verstellpumpe (2) als Hauptpumpe,
- einer Konstantpumpe (4) als Hilfspumpe,
- zwei Druckwaagen (DW1, DW2),
- einem primär zu versorgenden System, insbesondere in Form einer Lenkhydraulik (PL), das ein LS-Signal abgibt,
- einem sekundär zu versorgenden System, das ein weiteres LS-Signal abgibt, insbesondere in Form einer Arbeitshydraulik (PA), und
- einem weiteren hydraulisch zu versorgenden System, insbesondere in Form einer Bremshydraulik (PB),
wobei die eine Druckwaage (DW1) der Versorgung des primär zu versorgenden Systems (PL) und/oder des weiteren hydraulischen Systems (PB) dient, die andere Druckwaage (DW2) der Versorgung des primär zu versorgenden Systems (PL) und/oder des sekundär zu versorgenden Systems (PA) dient und wobei das LS-Signal für die Hauptpumpe (2) von einem Wechselventil (WV) stammt, das die jeweiligen LS-Signale von primär (PL) und sekundär (PA) zu versorgendem System miteinander vergleicht und das LS-Signal mit dem höheren Druck an die Hauptpumpe (2) zu deren Ansteuerung weiterleitet, **dadurch gekennzeichnet dass** die Hauptpumpe (2) direkt das sekundär zu versorgende System (PA) mit Hydraulikmedium vorgebbaren Drucks versorgt und dass die jeweilige Druckwaage (DW1, DW2) von einem LS-Signal derart ansteuerbar ist, dass die Konstantpumpe (4) auch der Versorgung des sekundär zu versorgenden Systems (PA) dient.

2. Druckversorgungsvorrichtung nach Anspruch 1, **dadurch gekennzeichnet, dass** die Hilfspumpe (4) ausgangsseitig an den Eingang der einen Druckwaage (DW1) angeschlossen ist, die an ihrer mit Federdruck (10) beaufschlagten Steuerseite (d) zusätzlich mit dem LS-Druck auf der Ausgangsseite (c) des Wechselventils (WV) oder einem LS-Druck beaufschlagt ist, der vor dem Wechselventil (WV) abgezweigt das LS-Signal des sekundär zu versorgenden Verbrauchers (PA) an diese Steuerseite (d) der einen Druckwaage (DW1) weiterleitet.

3. Druckversorgungsvorrichtung nach einem der vorstehenden Ansprüche, **dadurch gekennzeichnet, dass** die andere Druckwaage (DW2) an ihrer mit Federdruck (16) beaufschlagten Steuerseite (d) zusätzlich mit dem LS-Druck beaufschlagt ist, der, vor dem Wechselventil (WV) abgezweigt, das LS-Signal des primär zu versorgenden Verbrauchers (PL) an diese Steuerseite (d) weiterleitet.

4. Druckversorgungsvorrichtung nach Anspruch 2 und 3, **dadurch gekennzeichnet, dass** die beiden Druckwaagen (DW1, DW2) auf jeweils ihrer gegenüberliegend zu der einen Steuerseite (d) angeordneten weiteren Steuerseite (c) mit dem Steuerdruck des primär zu versorgenden Verbrauchers (PL) beaufschlagt sind oder die eine Druckwaage (DW1) auf ihrer weiteren Steuerseite (c) mit dem Steuerdruck des sekundär zu versorgenden Verbrauchers (PA) und die andere Druckwaage (DW2) auf ihrer weiteren Steuerseite (c) mit dem Steuerdruck des primär zu versorgenden Verbrauchers (PL) beaufschlagt ist.

5. Druckversorgungsvorrichtung nach einem der vorstehenden Ansprüche, **dadurch gekennzeichnet, dass** in eine Verbindungsleitung (20) zwischen den Ausgängen (e und b) der anderen Druckwaage (DW2), die mit einem Zweig (22) zu dem primär zu versorgenden und mit einem Zweig (24) zu dem sekundär zu versorgenden Verbraucher führt, ein Rückschlagventil (RV3) geschaltet ist, das in Richtung des primär zu versorgenden Verbrauchers (PL) öffnet, oder dass zwischen dem einen Ausgang (b) der anderen Druckwaage (DW2) und dem sekundär zu versorgenden System (PA) ein Rückschlagventil (RV3) geschaltet ist, das in Richtung des Ausgangs (b) der zweiten Druckwaage (DW2) schließt, und dass der Abgriff des LS-Signals für die eine Druckwaage (DW1) zwischen diesem Rückschlagventil (RV3) und der Einspeisestelle (P) der Hauptpumpe (2) in die Versorgungsleitung (8) zu dem sekundär zu versorgenden System (PA) erfolgt.

6. Druckversorgungsvorrichtung nach Anspruch 5, **dadurch gekennzeichnet, dass** ein weiteres Rückschlagventil (RV1) zwischen den beiden Eingängen (a) der beiden Druckwaagen (DW1, DW2) geschaltet ist oder zwischen dem Ausgang (e) der einen Druckwaage (DW1) und dem Eingang (a) der anderen Druckwaage (DW2), und dass das weitere Rückschlagventil (RV1) in Richtung der anderen Druckwaage (DW2) öffnet.

7. Druckversorgungsvorrichtung nach einem der Ansprüche 5 oder 6, **dadurch gekennzeichnet, dass** ein weiteres Rückschlagventil (RV2) zwischen dem Eingang (a) der anderen Druckwaage (DW2) und dem primär zu versorgenden System (PL) angeordnet ist, das in Richtung dieses Systems öffnet, und dass zwischen diesem weiteren Rückschlagventil (RV2) und diesem System die Steuerleitung (14) für die andere Steuerseite (c) der weiteren Druckwaage (DW2) einmündet.

8. Druckversorgungsvorrichtung nach einem der Ansprüche 5, 6 oder 7, **dadurch gekennzeichnet, dass** ein weiteres Rückschlagventil (RV4) zwischen die Versorgungsleitung (8) der Hauptpumpe und dem Eingang (a) der weiteren Druckwaage (DW2) geschaltet ist, das in Richtung der weiteren Druckwaage (DW2) öffnet.

9. Druckversorgungsvorrichtung nach einem der vorstehenden Ansprüche, **dadurch gekennzeichnet, dass** als Druckwaagen (DW1, DW2) 2/2-Wege-Druckwaagen oder 3/2-Wege-Druckwaagen oder einmal eine 2/2-Wege- und einmal eine 3/2-Wege-Druckwaage verwendet sind.

## Claims

1. Pressure supply device for prioritised volume flow distribution, particularly in mobile machinery, consisting of at least
- one variable displacement pump (2), which can be controlled by an LS signal, as a main pump,
- one fixed displacement pump (4) as an auxiliary pump,
- two pressure compensators (DW1, DW2),
- one system to be supplied as a primary system, especially in the form of a hydraulic steering system (PL), which issues an LS signal, one system to be supplied as a secondary system, which issues a further LS signal, especially in the form of a hydraulic operating system (PA), and
- a further system to be supplied by hydraulic means, especially in the form of a hydraulic braking system (PB),
wherein one pressure compensator (DW1) is used to supply the system to be supplied as the primary system (PL) and/or the further hydraulic system (PB), the other pressure compensator (DW2) is used to supply the system (PL) to be supplied as the primary system and/or the system (PA) to be supplied as the secondary system, and wherein the LS signal for the main pump (2) originates from a shuttle valve (WV), which compares the respective LS signals from the system to be supplied as the primary (PL) and secondary (PA) system, and passes on the LS signal with the higher pressure to the main pump (2) to control said pump, **characterised in that** the main pump (2) supplies the system (PA) to be supplied as the secondary system directly with hydraulic medium at a predefinable pressure and **in that** the respective pressure compensator (DW1, DW2) can be controlled by an LS signal such that the fixed displacement pump (4) is also used to supply the system to be supplied as the secondary system (PA).

2. Pressure supply device according to claim 2, **characterised in that** the outlet side of the auxiliary pump (4) is connected to the inlet of one pressure compensator (DW1), which is also subjected, on the control side (d) thereof that is subject to spring pressure (10), to the LS pressure on the outlet side (c) of the shuttle valve (WV) or an LS pressure, which, branched off before the shuttle valve (WV), passes the LS signal from the consumer (PA) to be supplied as a secondary consumer to this control side (d) of one pressure compensator (DW1).

3. Pressure supply device according to any of the preceding claims, **characterised in that** the other pressure compensator (DW2) is also subjected, on the control side (d) thereof that is subject to spring pressure (16), to the LS pressure which, branched off before the shuttle valve (WV), passes the LS signal from the consumer (PL) to be supplied as the primary consumer to this control side (d).

4. Pressure supply device according to claim 2 and claim 3, **characterised in that** the two pressure compensators (DW1, DW2) are subjected, in each case on the further control side (c) thereof that is arranged opposite the one control side (d), to the control pressure of the consumer (PL) to be supplied as the primary consumer, or one pressure compensator (DW1) is subjected, on the further control side (c) thereof, to the control pressure of the consumer (PA) to be supplied as the secondary consumer and the other pressure compensator (DW2) is subjected, on the further control side (c) thereof, to the control pressure of the consumer (PL) to be supplied as the primary consumer.

5. Pressure supply device according to any of the preceding claims, **characterised in that** a non-return valve (RV3) is connected in a connecting line (20) between the outlets (e and b) for the other pressure compensator (DW2), which leads, with one branch (22), to the consumer to be supplied as the primary consumer and, with one branch (24), to the consumer to be supplied as the secondary consumer, said non-return valve opening in the direction of the consumer (PL) to be supplied as the primary consumer, or **in that** a non-return valve (RV3) is connected between one outlet (b) of the other pressure compensator (DW2) and the system (PA) to be supplied as the secondary system, said non-return valve closing in the direction of the outlet (b) of the second pressure compensator (DW2), and **in that** the LS signal for one pressure compensator (DW1) is picked up between said non-return valve (RV3) and the inlet point (P) for the main pump (2) into the supply line (8) to the system (PA) to be supplied as the secondary system.

6. Pressure supply device according to claim 5, **characterised in that** a further non-return valve (RV1) is connected between the two inlets (a) for the two pressure compensators (DW1, DW2) or between the outlet (e) from one pressure compensator (DW1) and the inlet (1) to the other pressure compensator (DW2), and **in that** the further non-return valve (RV1) opens in the direction of the other pressure compensator (DW2).

7. Pressure supply device according to either of claims 5 or 6, **characterised in that** a further non-return valve (RV2) is arranged between the inlet (a) to the other pressure compensator (DW2) and the system (PL) to be supplied as the primary system, said non-return valve opening in the direction of this system, and **in that** the control line (14) for the other control side (c) of the further pressure compensator (DW2) emerges between this further non-return valve (RV2) and this system.

8. Pressure supply device according to any of claims 5, 6 or 7, **characterised in that** a further non-return valve (RV4) is connected between the supply line (8) of the main pump and the inlet (a) of the further pressure compensator (DW2), said non-return valve opening in the direction of the further pressure compensator (DW2).

9. Pressure supply device according to any of the preceding claims, **characterised in that** 2/2-way pressure compensators or 3/2-way pressure compensators or just one 2/2-way and one 3/2-way pressure compensator are used as pressure compensators (DW1, DW2).

## Revendications

1. Dispositif d'alimentation en pression pour la distribution avec priorité de courant en volume, notamment dans des machines mobiles fournissant du travail, constitué d'au moins
- une pompe (2) réglable pouvant être commandée au moyen d'un signal LS comme pompe principale,
- une pompe (4) constante comme pompe auxiliaire,
- deux balances (DW1, DW2) manométriques,
- un système à alimenter de manière primaire, notamment sous la forme d'une hydraulique (PL) de direction, qui donne un signal LS,
- un système à alimenter de manière secondaire, qui donne un autre signal LS, notamment sous la forme d'une hydraulique (PA) de travail, et
- un autre système à alimenter de manière hydraulique, notamment sous la forme d'une hydraulique (PB) de freinage,
dans lequel l'une des balances (DW1) manométrique sert à l'alimentation du système (PL) à alimenter de manière primaire et/ou de l'autre système (PB) hydraulique, l'autre balance (DW2) manométrique sert à l'alimentation du système (PL) à alimenter de manière primaire et/ou du système (PA) à alimenter de manière secondaire, et dans lequel le signal LS pour la pompe (2) principale provient d'une soupape (WV) à deux voies, qui compare entre eux les signaux LS respectifs des systèmes à alimenter de manière primaire (PL) et de manière secondaire (PA), et le signal LS ayant la pression la plus haute est acheminé à la pompe (2) principale pour son activation,
**caractérisé en ce que**
la pompe (2) principale alimente directement le système (PA) à alimenter de manière secondaire en un fluide hydraulique d'une pression pouvant être donnée à l'avance, et **en ce que** la balance (DW1, DW2) manométrique respective peut être activée par un signal LS, de manière à ce que la pompe (4) constante serve également à l'alimentation du système (PA) à alimenter de manière secondaire.

2. Dispositif d'alimentation en pression suivant la revendication 1, **caractérisé en ce que** la pompe (4) auxiliaire est raccordée, du côté de la sortie, à l'entrée de la une balance (DW1) manométrique qui, sur son côté (d) de commande, soumis à la pression (10) d'un ressort, est soumise à la pression LS du côté (c) de sortie de la soupape (WV) à deux voies ou à une pression LS qui, en dérivation avant la soupape (WV) à deux voies, achemine le signal LS du consommateur (PA) à alimenter de manière secondaire à ce côté (d) de commande de la une balance (DW1) manométrique.

3. Dispositif d'alimentation en pression suivant l'une des revendications précédentes, **caractérisé en ce que** l'autre balance (DW2) manométrique est soumise, sur son côté (d) de commande soumis à la pression (16) d'un ressort, supplémentairement à la pression LS qui, en dérivation avant la soupape (WV) à deux voies, achemine le signal LS du consommateur (PL) à alimenter de manière primaire à ce côté (d) de commande.

4. Dispositif d'alimentation en pression suivant la revendication 2 et 3, **caractérisé en ce que** les deux balances (DW1, DW2) manométriques sont, sur respectivement leur autre côté (c) de commande disposé à l'opposé du un côté (d) de commande, soumises à la pression de commande du consommateur (PL) à alimenter de manière primaire, ou la une balance (DW1) manométrique est, sur son autre côté (c) de commande, soumise à la pression de commande du consommateur (PA) à alimenter de manière secondaire et l'autre balance (DW2) manométrique est, sur son autre côté (c) de commande, soumise à la pression de commande du consommateur (PL) à alimenter de manière primaire.

5. Dispositif d'alimentation en pression suivant l'une des revendications précédentes, **caractérisé en ce que**, dans un conduit (20) de liaison entre les sorties (e et b) de l'autre balance (DW2) manométrique, qui mène, par une dérivation, (22) au consommateur à alimenter de manière primaire et, par une dérivation (24), au consommateur à alimenter de manière secondaire est monté un clapet (RV3) antiretour, qui s'ouvre dans le sens du consommateur (PL) à alimenter de manière primaire, ou **en ce que** la une sortie (b) de l'autre balance (DW2) manométrique et le système (PA) à alimenter de manière secondaire est monté un clapet (RV3) antiretour, qui se ferme dans le sens de la sortie (b) de la deuxième balance (DW2) manométrique, et **en ce que** le prélèvement du signal LS pour la une balance (DW1) manométrique s'effectue entre ce clapet (RV3) antiretour et le point (P) d'alimentation de la pompe (2) principale dans le conduit (8) d'alimentation allant au système (PA) à alimenter de manière secondaire.

6. Dispositif d'alimentation en pression suivant la revendication 5, **caractérisé en ce qu'**un autre clapet (RV1) antiretour est monté entre les deux entrées (a) des deux balances (DW1, DW2) manométriques ou entre la sortie (e) de l'une des balances (DW1) manométrique et l'entrée (a) de l'autre balance (DW2) manométrique, et **en ce que** l'autre clapet (RV1) antiretour s'ouvre dans le sens de l'autre balance (DW2) manométrique.

7. Dispositif d'alimentation en pression suivant l'une des revendications 5 ou 6, **caractérisé en ce qu'**un autre clapet (RV2) antiretour est monté entre l'entrée (a) de l'autre balance (DW2) manométrique et le système (PL) à alimenter de manière primaire, clapet qui s'ouvre dans le sens de ce système, et **en ce que**, entre cet autre clapet (RV2) antiretour et ce système, débouche le conduit (14) de commande de l'autre côté (c) de commande de l'autre balance (DW2) manométrique.

8. Dispositif d'alimentation en pression suivant l'une des revendications 5, 6 ou 7, **caractérisé en ce qu'**un autre clapet (RV4) antiretour est monté entre le conduit (8) d'alimentation de la pompe principale et l'entrée (a) de l'autre balance (DW2) manométrique, clapet qui s'ouvre dans le sens de l'autre balance (DW2) manométrique.

9. Dispositif d'alimentation en pression suivant l'une des revendications précédentes, **caractérisé en ce que** sont utilisées comme balances (DW1, DW2) manométriques, des balances manométriques à 2/2 voies ou des balances manométriques à 3/2 voies ou une fois une balance manométrique à 2/2 voies et une fois une balance manométrique à 3/2 voies.
